# EUROPEAN PATENT APPLICATION

(11) **EP 3 242 261 A1**
(43) Date of publication of application: **08.11.2017**
(21) Application number: 15875145.3
(22) Date of filing: 22.12.2015
(51) Int. Cl.: G06Q 20/12

(54) **REQUEST SENDING METHOD AND DEVICE THEREOF**

(30) Priority: 31.12.2014 CN 201410854480
(71) Applicant: Alibaba Group Holding Limited, Grand Cayman (KY)
(72) Inventor: MAO, Qiming, Hangzhou Zhejiang 311121 (CN); WANG, Xiao, Hangzhou Zhejiang 311121 (CN)
(74) Representative: Wilson, Alan Stuart
(86) International application number: PCT/CN2015/098260
(87) International publication number: WO 2016/107467

(57) **Abstract**

The present application discloses a request sending method, which includes receiving a request instruction sent by a user, wherein the request instruction includes request numerical information and a requested object identifier; splitting, according to a requested object limiting rule, a specific numerical value indicated by the request numerical information into at least two request numerical values conforming to the limiting rule; and successively sending, for the at least two request numerical values conforming to the limiting rule, requests to a requested object indicated by the requested object identifier. The deficiency of poor experience that is caused by the need of initiating a numerical data sending request for multiple times by a user is avoided. The present application further discloses a request sending apparatus.

## Description

### Technical Field

The present application relates to the field of computer technologies, and in particular, to request sending methods and apparatuses thereof.

### Background

In the 21^{th} century, the Internet, cloud technologies, and intelligent devices have changed people's lifestyles. The traditional lifestyle has broken down, and a new lifestyle is gradually entering into human lives. An increasing number of people now receptively conduct and complete various matters in daily lives through the Internet.

Daily matters that are handled by people are manifested as creation, modification, sending, exchange, etc., of various types of data information at the bottom layer In the Internet mode. People register accounts on various websites and systems of service organizations. Users may also possess various types of data and digital information on various websites and systems of service organizations. After logging on to a system of service organization, a user may remotely create or modify data or numerical information related thereto in a server of the service organization, or request a delivery of the data or numerical information related thereto to a user terminal or a network address specified by the user via the user terminal. Some service organizations may have their own internal game rules and data processing rules, and users need to submit a data request conforming to these rules in order to obtain correct execution. For example, a user has a certain quantity of credits (or virtual game currencies) in a system of service organization (or a game website), and the service organization (or the game website) may set a limit on a numerical limit of credits (or virtual game currencies) that are transferred out at a time. In this case, if the user wants to transfer a relatively large quantity of credits, the user needs to execute an operation of initiating a data request conforming to the rules for multiple times.

### Summary

Embodiments of the present application provide a request sending method, to solve a problem in existing technologies in which a user may need to perform an operation multiple times in a scenario where a maximum limit exists for a requested object to perform a single numerical data sending operation.

The embodiments of the present application provide a payment request sending apparatus, to solve a problem in existing technologies in which a user may need to perform an operation multiple times in a scenario where a maximum limit exists for a requested object to perform a single numerical data sending operation.

The embodiments of the present application employ the following technical solutions.

A request sending method includes receiving a request instruction sent by a user, the request instruction including request numerical information and an identifier of a requested object; dividing an actual numerical value indicated by the request numerical information into at least two request numerical values that conform to a requested object limiting rule according to the limiting rule; and sequentially sending requests to the requested object that is indicated by the identifier of the requested object for the at least two request numerical values that conform to the limiting rule.

A payment request sending apparatus includes a receiving unit configured to receive a request instruction sent by a user, the request instruction including request numerical information and an identifier of a requested object; a determination and division unit configured to divide an actual numerical value indicated by the request numerical information into at least two request numerical values that conform to a requested object limiting rule according to the limiting rule; and a request sending unit configured to sequentially send requests to the requested object that is indicated by the identifier of the requested object for the at least two request numerical values that conform to the limiting rule.

At least one solution provided in the embodiments of the present application above can achieve the following technical effects:
After a request instruction sent by a user is received, numerical data may be split, and at least two requests are sent to a requested object according to specific numerical values obtained through splitting. Accordingly, even in a scenario where a maximum limit exists for a single numerical data sending operation performed by the requested object, the user may not need to perform the sending operation for multiple times, thus avoiding the problem in the existing technologies that the user may need to perform the operation for multiple times.

### Brief Description of the Drawings

Accompanying drawings described herein are used to provide further understanding of the present application, and form a part of the present application. Exemplary embodiments of the present application and the description thereof are used to illustrate the present application, and are not construed as any improper limitation to the present application. In the drawings:
FIG. 1 is a request sending method according to a first embodiment of the present application.
FIG. 2 is a payment request sending method specifically applied to a financial institution according to a second embodiment of the present application.
FIG. 3 is another payment request sending method specifically applied to a financial institution according to a third embodiment of the present application.
FIG. 4 is a request sending apparatus according to an embodiment of the present application.

### Detailed Description

To make the objectives, technical solutions, and advantages of the present application clearer, the technical solutions of the present application will be described clearly and comprehensively with reference to specific embodiments of the present application and accompanying drawings corresponding thereto. Apparently, the described embodiments represent merely some and not all of the embodiments of the present application. All other embodiments obtained by one of ordinary skill in the art without making any creative effort shall fall in the scope of protection of the present application.

### First Embodiment

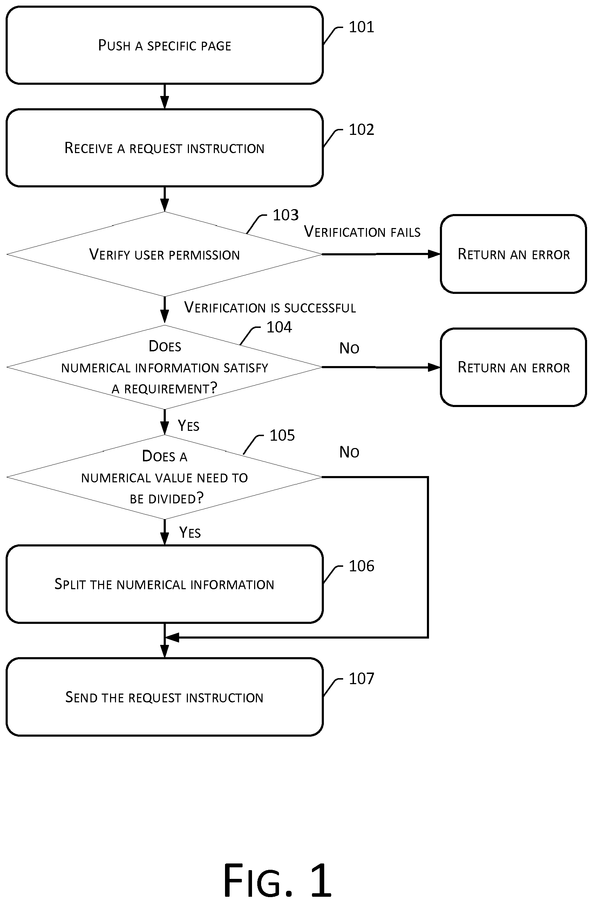

FIG. 1 is a flowchart of a request sending method according to the first embodiment of the present application, which mainly refers to a process in which a system receives a request instruction of a user, with request numerical information submitted by the user exceeding a limiting rule of a requested object. In this case, the system initiates a request application multiple times at a bottom layer of the system after dividing the request numerical information. The following operations are included.

S101: A system pushes a specific page to a user.

In this embodiment of the present application, the system may be a carrier entity such as a server or a personal computer (PC), with a relevant software platform running thereon.

The user is a registered user of an operating website, a game platform, a payment platform, etc., and possesses a unique registration ID.

The specific page includes an option field of a requested object, an input field of request numerical information, and the like.

S102: The system receives a request instruction of the user.

The request instruction includes request numerical information, a requested object identifier, user identity information, and the like. The request numerical information is specific numerical data information that is requested to be sent and inputted by the user on the specific page on his/her personal initiative. The requested object identifier indicates an object to which the user requests to send numerical data.

S103: The system performs verification of user permission based on the request instruction.

The verification of the user permission may include: (1) verifying a logon permission of the user in the system based on user identity information; (2) verifying a request permission of the user based on the user identity information and a requested object identifier.

The request permission is determined based on whether the user, the system, and the requested object sign a tripartite consignment agreement. If the user does not have this permission, an error is reported and returned. If the user is determined to have this permission, the next operation is performed.

The system may store respective identity information of user(s) who sign(s) tripartite consignment agreement(s), and corresponding requested object identifier(s) in a local database. In addition, the system may further store respective mapping relationship(s) between the respective identity information of the user(s) and the corresponding requested object identifier(s). Therefore, when receiving a request instruction, the system may determine: (1) whether user identity information matching user identity information included in the request instruction can be found in the local database; (2) whether a mapping relationship between the user identity information and a requested object identifier included in the request instruction can be found in the local database. When results of these two determinations are both affirmative, a user can be determined to have a request permission as described above.

S104: A determination is made as to whether a request numerical value satisfies a requirement based on the request numerical value and a requested object identifier.

The system first queries a limiting rule of a requested object according to a requested object identifier. The system locally calls the limiting rule of the requested object for a comparison with a request numerical value included in the request instruction of the user.

If the request numerical value does not conform to the limiting rule, an error is reported and returned.

If the request numerical value conforms to the limiting rule, a query is further made as to whether a specific numerical value of the user under the requested object is greater than or equal to the request numerical value. If the specific numerical value is greater than or equal to the request numerical value, S205 is performed. If the specific numerical value is less than the request numerical value, an error is reported and returned.

S105: A determination is made as to whether a splitting is needed based on the request numerical value and the requested object identifier.

A single-time sending limit for numerical data of the requested object is called from the local database based on the requested object identifier, and a comparison is made.

If the request numerical value included in the request instruction is greater than the single-time sending limit, S106 is performed.

If the request numerical value included in the request instruction is less than or equal to the single-time sending limit, S107 is performed.

S106: The request numerical value is split according to a single-time sending limit of a requested object.

In other words, the request numerical value is divided by a limit of the single-time sending limit.

If the quotient is an integer, the request numerical value is split into a number of specific numerical values, with the number being the quotient.

If the quotient is not an integer, the request numerical value is needed to split into a number of single-time sending limit limits, with the number being an integer part of the quotient, plus a numerical value request having a request numerical value to be the remainder thereof.

S107: A request is initiated to the requested object.

According to S105, a request is directly initiated to the requested object for the request numerical value that does not need to be split. Alternatively, requests are initiated to the requested object according to the number of times the request numerical value is split and specific numerical data corresponding thereto.

### Second Embodiment

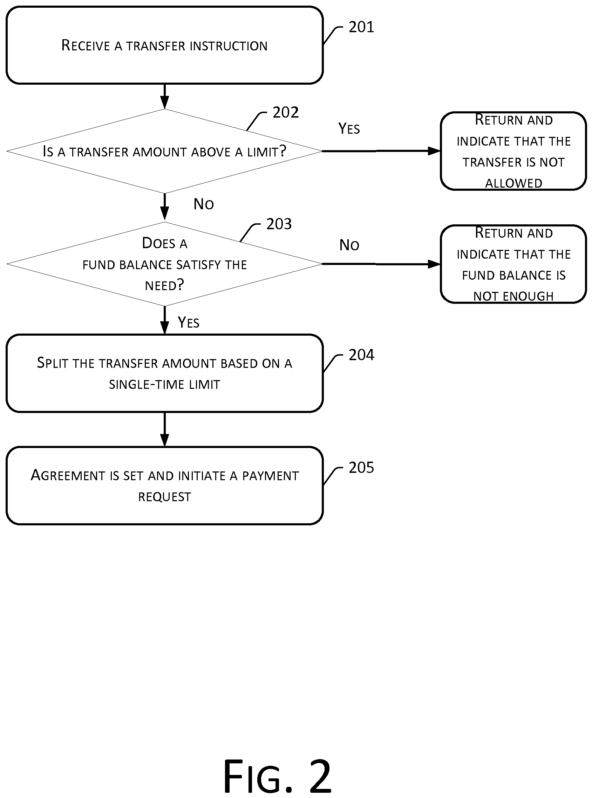

FIG. 2 is a process of a payment request sending method according to the second embodiment of the present application, which is specifically used to solve the problem in the existing technologies that a user may need to perform an operation for multiple times in a scenario where there exists a limit on the maximum amount that can be transferred out in a single transfer operation performed by a payment object. The process mainly includes the following operations.

S201: A system receives a payment request instruction sent by a user.

In this embodiment of the present application, the system may be a payment platform, such as Alipay™, Tenpay, or Yu'E Bao, etc. The system may be a carrier entity such as a server (such as the third-party server described in the Background section) or a personal computer (PC), with a relevant software platform running thereon.

The user may be a registered user of the payment platform, and has a unique registration ID.

The payment request instruction may include transfer amount information and a payment object identifier. The transfer amount information may be, for example, an amount of fund transfer that the user inputs on a specific page according to personal willingness. The payment object identifier indicates an object to which the user wants to make a payment.

S202: The system determines whether an amount of transfer exceeds a limit according to the amount of transfer and a payment object identifier. If a determination is made that the amount of transfer does not exceed a set daily transfer limit of a payment object, S103 is performed. Otherwise, prompt information indicating that the transfer is not allowed may be returned and pushed to the user.

Specifically, the system may first query a daily limit of the payment object according to the payment object identifier. For example, the system may locally set up with daily transfer limit data tables for payment objects. The data tables and the payment object identifiers correspond to each other in a one-to-one manner, and are stored in a local database or local memory. The system only needs to directly call a data table according to a payment object identifier.

After comparison with the amount of transfer included in the payment request instruction of the user with a corresponding data table, the system pushes prompt information indicating that the transfer is not allowed to the user if the amount of transfer in the payment request exceeds the set daily transfer limit of the payment object. If the amount of transfer in the payment request instruction is less than or equal to the set daily transfer limit of the payment object, S203 is performed.

S203: The system checks with the payment object a fund balance in a payment object account of the user who submits the payment request instruction, and performs a comparison.

Specifically, the system first submits a query about a fund balance of the user in a payment user to the payment object, and compares the fund balance with the amount of transfer indicated by the transfer amount information included in the payment request instruction. If the amount of transfer indicated by the transfer amount information is less than or equal to the fund balance, S204 is performed. If the transfer amount indicated by the transfer amount information is greater than the fund balance, prompt information indicating that the balance is insufficient is pushed to the user.

S204: The amount of transfer is split based on a single-transfer limit of the payment object.

An implementation of a splitting method includes:
dividing the amount of transfer by the single-transfer limit:;
if a quotient thereof is less than one, directly initiating a single payment request to the payment object according to the transfer amount;
if the quotient is an integer, dividing the transfer amount into a number of transfer limits, with the number being quotient which is the integer (for example, if the amount of transfer is 30000 dollars and the single-transfer limit is 5000 dollars, the amount of transfer is divided into six individual transfers with each transfer having 5000 dollars); and
if the quotient is not an integer, dividing the amount of transfer into a number of transfer limits, with the number being an integer part of the quotient, plus a transfer request having a transfer fund being the remainder (in other words, if the amount of transfer is 32000 dollars and the single-transfer limit is 5000 dollars, for example, the amount of transfer is divided into six individual transfers with each transfer having 5000 dollars, plus one transfer of 2000 dollars.

S205: The system initiates a payment request to the payment object.

Specifically, the system may directly initiate a payment request to the payment object. Alternatively, the system may initiate a payment request to the payment object by triggering a payment platform, thus achieving an initiation of a payment request to the payment object.

### Third Embodiment

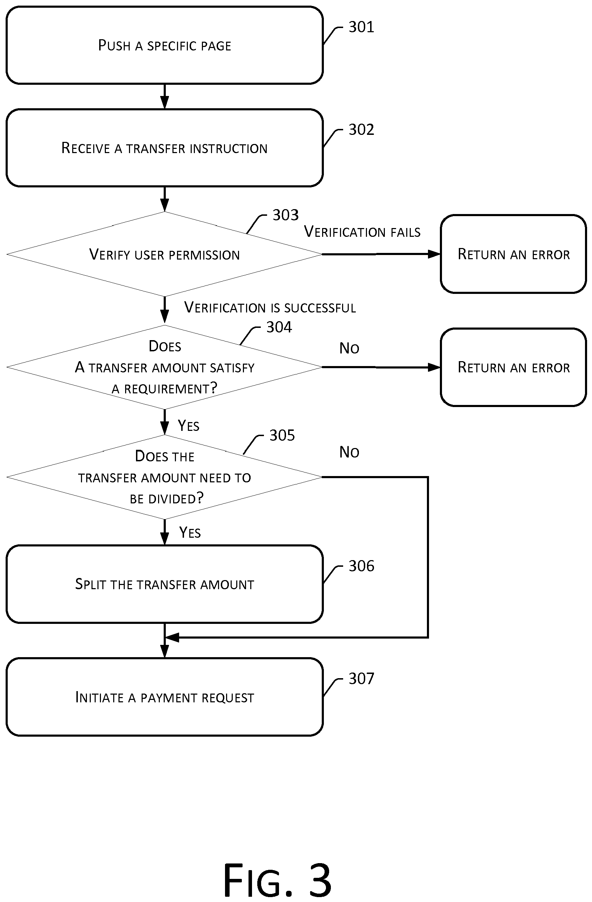

FIG. 3 is a flowchart of a payment request sending method according to the third embodiment of the present application, which mainly refers to a process in which a system receives a payment request instruction of a user, with a transfer amount submitted by the user exceeding a single-transfer limit of a payer. In this case, the system initiates a payment application multiple times at a bottom layer of the system after dividing the transfer amount. The following operations are included.

S301: A system pushes a specific page to a user.

In this embodiment of the present application, the system mainly refers to a payment platform, such as Alipay™, Tenpay, or Yu'E Bao, etc. The system specifically may be a carrier entity such as a server or a personal computer (PC), with a relevant software platform running thereon.

The user may be a registered user of the payment platform, and has a unique registration ID.

The specific page includes an option field of a payment object, an input field of a transfer amount, an input field of a payment password, etc.

S302: The system receives a payment request instruction of the user.

The payment request instruction includes transfer amount information, a payment object identifier, user identity information, and the like. The transfer amount information is a transfer fund amount that the user inputs on the specific page according to personal willingness. The payment object identifier indicates an object to which the user wants to make a payment.

S303: The system performs verification of a user permission based on the payment request instruction.

The verification of the user permission may include: (1) verifying a logon permission of the user in a payment platform according to user identity information; and (2) verifying a transfer permission of the user based on the user identity information and a payment object identifier.

The transfer permission is determined based on whether the user, the payment platform, and the payment object sign a tripartite consignment agreement. If the user does not have this permission, an error is reported and returned. If the user is determined to have this permission, the next operation is performed.

The tripartite agreement is an electronic agreement signed by the user in the payment platform, agreeing that the payment platform initiates a payment application to the payment object. A specific application includes a mode such as quick payment, for example.

The system may store respective identity information of user(s) who signs tripartite consignment agreement(s), and corresponding payment object identifier(s) in a local database, and may further store respective mapping relationship(s) between the respective identity information of the user(s) and the payment object identifier(s). Therefore, upon receiving a payment request instruction, the system may determine: (1) whether user identity information matching user identity information included in the payment request instruction can be found in the local database; and (2) whether a mapping relationship between the user identity information and a payment object identifier included in the payment request instruction can be found in the local database. If results of these two determinations are both affirmative, a determination can be made that the user has the transfer permission as described above.

S304: A determination is made as to whether a transfer amount satisfies a requirement based on the transfer amount and a payment object identifier.

Specifically, the system first queries a daily limit of the payment object according to an identifier of the payment object. Daily transfer limit data tables of payment objects are locally set up in the system. The data tables and identifiers of the payment objects correspond to each other in a one-to-one manner, and are stored in a local database or local memory. The system only needs to directly call a respective data table according to the identifier of the payment object. A comparison with the transfer amount included in the payment request instruction of the user is made according to the corresponding data table.

If the transfer amount in the payment request instruction exceeds a set daily transfer limit of the payment object, prompt information indicating that the limit is exceeded and the transfer is not allowed is returned and pushed to the user.

If the transfer amount in the payment request instruction is less than or equal to the set daily transfer limit of the payment object, the payment platform is triggered to initiate a query request to the payment object according to the user identity information and the payment object identifier to obtain a fund balance of the user under the payment object, and compare the fund balance with the transfer amount. If the transfer amount included in the payment request instruction is less than or equal to the fund balance, S305 is performed. If the transfer amount included in the payment request instruction is greater than the fund balance, prompt information indicating that the balance is insufficient is pushed to the user.

S305: A determination is made as to whether splitting is needed according to the transfer amount and the payment object identifier.

A single-transfer limit of the payment object is called from the local database according to the payment object identifier, and a comparison is made. If the transfer amount included in the payment request instruction is greater than the single-transfer limit, S306 is performed. If the transfer amount included in the payment request instruction is less than or equal to the transfer limit, S307 is performed.

S306: The transfer amount is split according to a single-transfer limit of a payment object.

An implementation of a splitting method includes:
dividing the transfer amount by the single-transfer limit;
if a quotient thereof is an integer, splitting the transfer amount into a number of transfer limits with the number being the quotient which is the integer (e.g., if the transfer amount is 30000 dollars and the single-transfer limit is 5000 dollars, the transfer amount is split into six individual transfers each having 5000 dollars); and
if the quotient is not an integer, splitting the transfer amount into a number of transfer limits with the number being an integer part of the quotient, plus a transfer request having a transfer fund as the remainder (e.g., if the transfer amount is 32000 dollars and the single-transfer limit is 5000 dollars, the transfer amount needs to be split into six individual transfers each having 5000 dollars, plus one transfer of 2000 dollars).

S307: A payment request is initiated to the payment object.

According to S305, a payment request is directly initiated to the payment object for the transfer amount that does not need to be split. Alternatively, asynchronous payment requests are initiated to the payment object according to the number of split transfers and corresponding transfer funds, i.e., multiple payment requests are initiated to the payment object at different times.

### Fourth Embodiment

A difference between the fourth embodiment and the third embodiment is that the verification of the permission of the user identity information and the transfer permission at S303 is performed at Step S301. For example, if a user does not have the transfer permission on a specific pushed page, the user cannot select a payment object in the option field of the payment object for implementation.

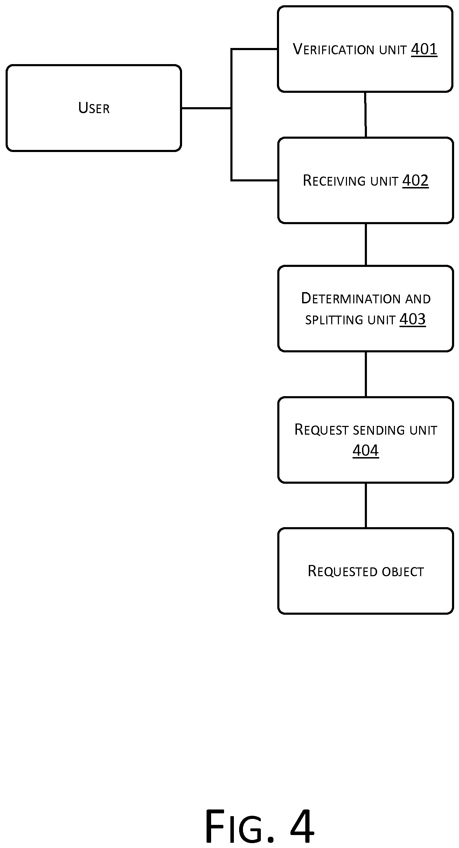

The above shows the request sending methods provided in the present application. Based on the same ideas, an embodiment of the present application further provides a corresponding request sending apparatus, as shown in FIG. 4.

FIG. 4 is a schematic structural diagram of a payment request sending apparatus according to an embodiment of the present application, which specifically includes:
Specifically, the apparatus as shown in FIG. 3 generally runs on a server.

A verification unit 401 is used for verifying a logon permission, a request permission, etc., of a user.

A receiving unit 402 is used for receiving a request instruction sent by the user.

A determination and receiving unit 403 is used for determining whether a transfer amount in the request instruction meets a requirement and dividing numerical information.

A request sending unit 404 is used for initiating a request to a requested object according to information sent by the determination and splitting unit.

In the present application, a user logs on to a website, a game platform, a payment platform, etc., and the verification unit 301 verifies a logon permission of the user. When the user clicks to send a request, the system pushes a specific page to the user, which includes a requested object option field, an input field of a request numerical value, a confirmation button, etc. When the specific page is pushed, the verification unit 401 automatically verifies a request permission of the user, calls a user permission identifier from a local database based on user identity information, and determines whether the user signs a tripartite agreement with a certain requested object and the system. If no tripartite agreement is found, the requested object is not displayed in the requested object option box.

After selecting a requested object and inputting a request numerical value, a password, etc., on the specific page, the user clicks the confirmation button to send a request instruction to the receiving unit 402. The request instruction includes request numerical information, a requested object identifier, and user identity information. The request numerical information is a request numerical amount inputted by the user on the specific page according to personal willingness. The requested object identifier indicates an object to which the user wants to send numerical data.

After receiving information of the request instruction from the receiving unit 402, the determination and splitting unit 403 first determines whether the request numerical value conforms to a requirement of a limiting rule according to the request numerical value and the requested object identifier. If the request numerical value in the request instruction does not conform to the requirement of the limiting rule of the requested object, an error is reported and returned. If the request numerical value in the request instruction meets the limiting rule of the requested object, a query request is initiated to the requested object according to the user identity information and the requested object identifier to obtain a specific numerical limit of the user under the requested object, and a comparison is made.

If the request numerical value included in the request instruction is greater than the numerical limit owned by the user, an error is reported and returned. If the request numerical value included in the request instruction is less than or equal to the numerical limit owned by the user, a determination is made as to whether the request numerical value needs to be split according to the request numerical value and the requested object identifier. Details of operations include as follows: a single-time sending limit of the requested object is called from the local database according to the requested object identifier, and a comparison is made.

If the request numerical value included in the request instruction is less than or equal to the single-time sending limit, the request sending unit 404 directly initiates a request to the requested object. If the request numerical value included in the request instruction is greater than the single-time sending limit, the request numerical value is split. An implementation of a splitting method is as follows: dividing the request numerical value by the single-time sending limit; and if a quotient thereof is an integer, splitting the request numerical value into a number of request numerical values with the number being the quotient. If the quotient is not an integer, splitting the request numerical value into a number of request numerical values with the number an integer part of the quotient, plus a request having a respective request numerical value as the remainder.

After the splitting is completed, the determination and splitting unit 403 triggers the request sending unit 404 to initiate requests to the requested object. The request sending unit 404 initiates asynchronous sending of the requests to the requested object according to the number of requests and a respective request numerical value of each individual request determined by the determination and splitting unit 403, i.e., initiates multiple requests to the requested object at different times, until a payment is completed.

One skilled in the art should understand that the embodiments of the present invention may be provided as a method, a system, or a computer program product. Therefore, the embodiments of the present application may be implemented in a form of a complete hardware embodiment, a complete software embodiment, or an embodiment that is combination of software and hardware. Moreover, the embodiments of the present invention may employ a form of a computer program product implemented on one or more computer usable storage media (including, but not limited to, a magnetic disk memory, a CD-ROM, an optical memory, and the like) that include computer usable program code.

The present invention is described with reference to flowcharts and/or block diagrams of the methods, devices (systems), and computer program products according to the embodiments of the present invention. It should be understood that computer program instructions may be used to implement each process and/or block in the flowcharts and/or block diagrams and a combination of process(es) and/or block(s) in the flowcharts and/or the block diagrams. These computer program instructions may be provided to a general-purpose computer, a special-purpose computer, an embedded processor, or a processor of another programmable data processing device to generate a machine, so that the instructions executed by a computer or a processor of another programmable data processing device generate an apparatus for implementing function(s) specified in one or more processes in the flowcharts and/or in one or more blocks in the block diagrams.

These computer program instructions may also be stored in a computer readable storage device that can instruct a computer or another programmable data processing device to perform operations in a particular manner, such that the instructions stored in the computer readable storage device generate an article of manufacture that includes an instruction apparatus. The instruction apparatus implements function(s) that is/are specified in one or more processes in the flowcharts and/or in one or more blocks in the block diagrams.

These computer program instructions may also be loaded onto a computer or another programmable data processing device, such that a series of operations are performed on the computer or the other programmable device, thereby generating computer-implemented processing. Therefore, the instructions executed on the computer or the other programmable device provide a procedure for implementing function(s) specified in one or more processes in the flowcharts and/or in one or more blocks in the block diagrams.

In a typical configuration, a computing device includes one or more processors (CPUs), an input/output interface, a network interface, and memory.

The memory may include a form of computer readable media such as a volatile memory, a random access memory (RAM) and/or a non-volatile memory, for example, a read-only memory (ROM) or a flash RAM. The memory is an example of a computer readable media.

The computer readable media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory

(EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

It should further be noted that terms "include", "comprise", or any variants thereof are intended to cover a non-exclusive inclusion, such that a process, a method, a product or a device that includes a series of elements not only includes such elements but also includes other elements not specified expressly, or may further include inherent elements of the process, method, product, or device. Without further restrictions, an element defined by a phrase "include a/an..." does not exclude other same elements to exist in a process, method, product, or device that includes the element.

One skilled in the art should understand that the embodiments of the present application may be provided as a method, a system, or a computer program product. Therefore, the embodiments of the present application may be implemented in a form of a complete hardware embodiment, a complete software embodiment, or an embodiment that is a combination of software and hardware. Moreover, the embodiments of the present application may employ a form of a computer program product implemented on one or more computer usable storage media (including, but not limited to, a magnetic disk memory, a CD-ROM, an optical memory, and the like) that includes a computer usable program code.

The foregoing descriptions are merely embodiments of the present application, which are not intended to limit the present application. For one skilled in the art, the present application can have various modifications and changes. Any modifications, equivalent replacements, and improvements made without departing from the spirit and principles of the present application shall be included in the scope of the claims of the present application.

## Claims

1. A request sending method comprising:
receiving a request instruction sent by a user, wherein the request instruction comprises request numerical information and an identifier of a requested object;
dividing a specific numerical value indicated by the request numerical information into at least two request numerical values conforming to a limiting rule of the requested object according to the limiting rule; and
successively sending requests to the requested object indicated by the identifier of the requested object for the at least two request numerical values conforming to the limiting rule.

2. The method of claim 1, wherein the method further comprises confirming that the request numerical information conforms to the limiting rule according to an established limiting rule of the requested object before dividing the request numerical information.

3. The method of claim 2, wherein the method further comprises determining that a specific numerical value owned by the user in the requested object is greater than or equal to the numerical value indicated by the request numerical information before dividing the request numerical information.

4. The method of claim 1, wherein initiating at least two requests to the requested object indicated by the identifier of the requested object according to the at least two request numerical values comprises:
initiating the at least two requests one by one to the requested object in a manner of initiating another request after execution of one request is finished, until the requested object finishes execution for the at least two request numerical values according to the at least two request numerical values.

5. The method of claim 1, wherein the method further comprises verifying whether the user has a request permission before receiving the request instruction sent by the user.

6. The method of claim 5, wherein verifying whether the user has the request permission comprises:
pushing a first specific page to the user;
verifying user identity information inputted via the first specific page; and
verifying whether a tripartite agreement exists among the user, the requested object, and a local system according to the user identity information.

7. The method of claim 6, wherein the specific page is configured with a pull-down menu of a plurality of requested objects, and verifying that the user has the permission comprises verifying whether the user has the permission when the user selects the requested object through the pull-down menu.

8. The method of claim 1, wherein receiving the request instruction sent by the user comprises:
pushing a second specific page to the user; and
receiving the request instruction triggered by the user on the second specific page.

9. The method of claim 8, wherein the specific page comprises a confirmation button, an input field of the request numerical value, and an input field of a password for input by the user, the request numerical value is a transfer amount, and the password is a payment password, and wherein the request instruction is a request instruction that is triggered by clicking the confirmation button after the user inputs the transfer amount in the input field of the transfer amount and inputs the payment password in the input field of the payment password.

10. The method of claim 1, wherein the request numerical information is transfer amount information, and dividing a transfer amount indicated by the transfer amount information into at least two transfer funds according to the transfer amount information comprises:
calling a corresponding algorithm in a system database according to the requested object identifier; and
dividing the transfer amount according to the corresponding algorithm and the transfer amount information.

11. A payment request sending apparatus, comprising:
a receiving unit configured to receive a request instruction sent by a user, wherein the request instruction comprises request numerical information and an identifier of a requested object;
a determination and splitting unit configured to split a specific numerical value indicated by the request numerical information into at least two request numerical values conforming to a limiting rule of the requested object according to the limiting rule; and
a request sending unit configured to sequentially send requests to the requested object indicated by the identifier of the requested object according to the at least two request numerical values determined by the determination and splitting unit.

12. The apparatus of claim 11, wherein the determination and splitting unit confirms that the request numerical information conforms to the limiting rule according to an established limiting rule of the requested object.

13. The apparatus of claim 12, wherein the determination and splitting unit is further configured to determine that a specific numerical value owned by the user in the requested object is greater than or equal to the numerical value indicated by the request numerical information.

14. The apparatus of claim 11, wherein initiating at least two requests to the requested object indicated by the identifier of the requested object according to the at least two request numerical values by the request sending unit, comprises:
initiating the at least two requests one by one to the requested object in a manner of initiating another request after execution of one request is finished, until the requested object finishes execution for the at least two request numerical values according to the at least two request numerical values.

15. The apparatus of claim 11, wherein the apparatus further comprises a verification unit, and the verification unit verifies whether the user has a request permission before the receiving unit receives the request instruction sent by the user.

16. The apparatus of claim 15, wherein verifying whether the user has the request permission by the verification unit comprises:
pushing a first specific page to the user;
verifying user identity information input via the first specific page; and
verifying whether a tripartite agreement exists among the user, the requested object, and a local system based on the user identity information.

17. The apparatus of claim 16, wherein the specific page is configured with a pull-down menu of a plurality of payment objects, and verifying that the user has the permission comprises verifying that the user has the permission when the user selects a payment object through the pull-down menu.

18. The apparatus of claim 11, wherein the receiving the request instruction sent by the user by the receiving unit comprises:
pushing a second specific page to the user; and
receiving the request instruction triggered by the user on the second specific page.

19. The method of claim 18, wherein the specific page comprises a confirmation button, an input field of the request numerical value, and an input field of a password for input by the user, the request numerical value is a transfer amount, and the password is a payment password, and wherein the request instruction is a request instruction that is triggered by clicking the confirmation button after the user inputs the transfer amount in the input field of the transfer amount and inputs the payment password in the input field of the payment password.

20. The method of claim 11, wherein the request numerical information is transfer amount information, and splitting a transfer amount indicated by the transfer amount information into at least two transfer funds according to the transfer amount information by the determination and splitting unit comprises:
calling a corresponding algorithm in a system database according to a payment object identifier; and
splitting the transfer amount according to the corresponding algorithm and the transfer amount information.
